# EUROPEAN PATENT SPECIFICATION

(11) **EP 3 558 576 B1**
(45) Date of publication and mention of the grant of the patent: **24.03.2021**
(21) Application number: 16836175.6
(22) Date of filing: 23.12.2016
(51) Int. Cl.: B23K 1/00, F02M 63/02, B23K 1/20, B23K 3/06, B23K 3/08, F02M 55/02, F02M 61/16, B23K 101/00, B23K 101/06, B23K 103/04, B23K 103/06

(54) **METHOD OF JOINING EXTERNAL ELEMENTS TO A GASOLINE DIRECT INJECTION (GDI) FUEL RAIL BY DISCONTINUOUS COATING OF THE GDI FUEL RAIL WITH BRAZING PASTE**
VERFAHREN ZUR VERBINDUNG VON EXTERNEN ELEMENTEN AUF EINEM KRAFTSTOFFZUTEILER MIT BENZINDIREKTEINSPRITZUNG (BDE) DURCH DISKONTINUIERLICHE BESCHICHTUNG VON DEM BDE-KRAFTSTOFFZUTEILER MIT LÖTPASTE
PROCÉDÉ D'ASSEMBLAGE D'ÉLÉMENTS EXTERNES SUR UNE RAMPE À CARBURANT D'INJECTION DIRECTE D'ESSENCE (GDI) PAR REVÊTEMENT DISCONTINU DE LA RAMPE À CARBURANT GDI AVEC UNE PÂTE DE BRASAGE

(43) Date of publication of application: 30.10.2019
(73) Proprietor: Sentes Bir Metalurji Kimya Enerji Uretim Ve Geri Donusum Teknolojileri Sanayi Ticaret Anonim Sirketi, 35730 Izmir (TR)
(72) Inventor: GÜRBÜZ, Ça r, 35730 Izmir (TR)
(86) International application number: PCT/TR2016/050532
(87) International publication number: WO 2018/117991

(56) References cited:
- DE-A1-102006 013 268
- US-A- 5 139 822
- US-A1- 2009 011 202
- US-A1- 2011 108 005

## Description

The invention relates to GDI (Gasoline Direct Injection) fuel rails in petrol engines, and more particularly to a method of joining external elements such as injector cups and/or inlet fitting and/or sensor port and/or brackets to a Gasoline Direct Injection (GDI) fuel rail by means of brazing according to the preamble of claim 1 (see for example US 2011 108005 A1). The process of coating with brazing paste is applied for joining the injector cups, inlet fittings, sensor ports and brackets to the rail by means of brazing method and thereby leak-proof assembling the injector cups, inlet fittings, sensor ports and brackets.

### Prior Art

In present day, the GDI (Gasoline Direct Injection) fuel rails are used for transferring the fuel, which is delivered by increasing its pressure with the pump in petrol engines, to the injectors. The GDI (Gasoline Direct Injection) fuel rails are manufactured by joining different parts. The joining of the parts is carried out in continuous or vacuum furnaces with protective atmosphere (usually with pure hydrogen), mostly using pure copper or copper-alloy brazing filler metal. Since it is more suitable for automation in manufacturing, the manufacturers prefer to apply pure copper, which is used as brazing filler metal, in paste form. The brazing paste is manufactured by mixing pulverized metal powders with binders to obtain a pasty material. In some cases, rings or preformed copper pieces may also be used as filler metal instead of the brazing paste.

Again in the prior art, after the different parts that constitute the GDI (Gasoline Direct Injection) fuel rail are joined together with welding methods such as laser welding, spot welding or TIG, the copper brazing paste is applied to the joints by means of pneumatic or volumetric dispensing pumps. Since the GDI (Gasoline Direct Injection) fuel rail is a critical component, the amount of copper paste to be applied is important. Applying a lesser amount of filler metal (copper brazing paste) to the joint may result in insufficient brazing and thereby weak joints, and this may lead to leakages in the fuel rail, which operates under high pressure. In cases where the paste is applied by means of dispensing method, it is difficult to control whether sufficient amount of material is applied.

In the automation practices in prior art, dispensing and applying the copper paste on different segments on the part take average 30-90 seconds depending on the complexity of parts. When the amount of production increases, it is necessary to make investments and install a new paste dispensing line in order to meet paste dispensing capacity increase.

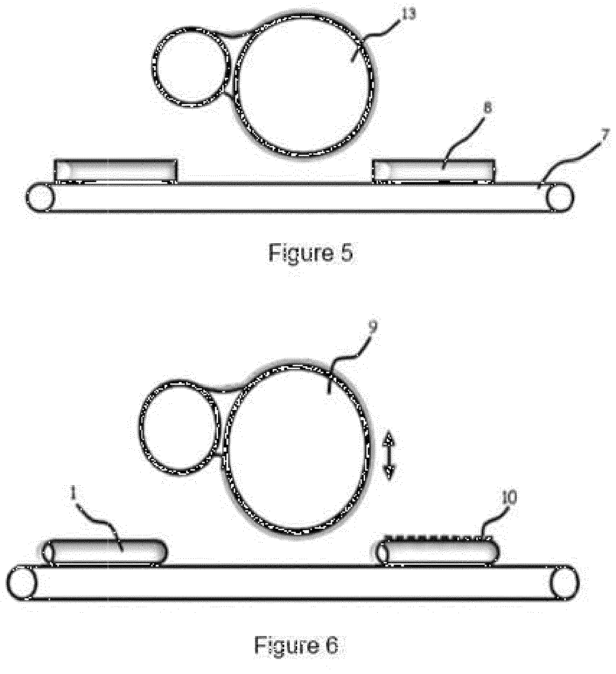

In the prior art, instead of applying the copper paste on the GDI (Gasoline Direct Injection) fuel rail (1) by means of dispensing method (figure 5; prior art), roller coating procedure is applied by transferring the paste from a fixed-position roller (13). In roller coating method, the coating material is smeared or transferred onto the rail (1) as the fixed-position roller (13) touches the highest points of the rail (1) that travels underneath it by means of a conveyor (7). This copper paste application method can be applied for fuel rails, but since it touches the highest point of the part passing beneath the fixed-position roller (13), the entire surface of the fuel rail (1) that contacts the fixed-position roller (13) is coated. This results in coating the sections where brazing is not needed. It is sufficient to coat only the injector cups, inlet fittings, sensor ports sections and the sections required for the installation of the brackets.

The patent no. US2186361, again covered in the prior art, is related with fuel rail coating apparatus. The said patent involves coating plastics derivatives such as bitumen mastic in a thin form onto pipe-like cylindrical objects. This coating is aimed at water-proofing. This coating process is continuous and it does not contain joints. The coating material is applied at gum consistency. This patent provides a continuous coating process; it does not provide coating of specific sections, or discontinuous coating.

The patent no. US5792518, which constitutes another example, is a portable coating process with local application. The invention aims at coating a protective layer on the pipe without joints, by means of chemically bonding two composite layers. This process is suitable especially for metal and concrete surfaces. Here, there is a local and portable application. The coating process is carried out by means of thermal spraying.

The patent no. US2348698, which is another example, is related with the continuous coating of metal pipes with paint, varnish or the like. The said coating process is carried out on a conveyor, by means of spray bombardment and then with the help of rollers.

### Summary of the Invention

In order to eliminate the disadvantages in prior art; the benefits and advantages of the invented roller coating in brazing paste coating:
According to the present invention, a method of joining external elements such as injector cups and/or inlet fitting and/or sensor port and/or brackets to a Gasoline Direct Injection (GDI) fuel rail by means of brazing is defined in claim 1. The dependent claims define preferred embodiments of the present invention.

In the invented coating method, the coating is continuous and the principle is coating only the desired and required sections.

Coating speed: The application of copper paste on the part takes 2-3 seconds, as the travel speed of the pipe, coated with brazing paste by means of the roller, is 0,2-0,5 meters/second. The main advantage of roller coating is simultaneous coating of multiple pieces (rails) by placing them side by side on the conveyor band. There is a capacity difference with the other method.

The amount of the brazing paste to be applied to the joint can be set by adjusting the thickness of the paste plastered on the roller. The same amount of paste can be applied every time.

An additional advantage is that the brazing filler metal, which advances inside the gap between the parts with capillary forces in prior art, is applied below the parts to be joined by means of roller coating.

The cost of investment is rather low compared to the automation systems with pneumatic or volumetric dispensing.

Since the brazing paste provides a good adhesion onto the rail when it is dried after it is applied, the problems such as falling off, breaking or peeling of the paste will not arise. After the brazing paste is applied with the roller, the parts can be dried and stocked.

### Brief Description of the Figure

Figure 1 is the general outlook of the rail to be coated,
Figure 2 is the general outlook of the rail coated,
Figure 3 is the installation-stage outlook of the rail coated,
Figure 4 is the installation outlook of the rail coated,
Figure 5 is the outlook of the coating process pertaining to prior art,
Figure 6 is the outlook of the coating process according to the present invention.

### Description of Reference Numbers

- Ref. No: Ref. Name
- 1: Rail
- 2: Hole
- 3: Joint
- 4: Joint
- 5: Injector cups
- 6: Brackets
- 7: Conveyor band
- 8: Metal plate
- 9: Moving roller
- 10: Coating
- 13: Fixed-position roller

### Detailed Description of the Invention

The invention relates to the coating with brazing paste of the Gasoline Direct Injection (GDI) and Low Pressure (LP) fuel rails (1) in internal combustion petrol engines. In the said rails (1), impermeability is very important in the parts joined after brazing. Therefore, insufficiency or inappropriateness of the brazing filler material after the assembly will involve serious risks. In this context, brazing is applied by coating with brazing filler material for assembly and impermeability in the rails (1) that provide the flow of important fluids such as fuels, etc.

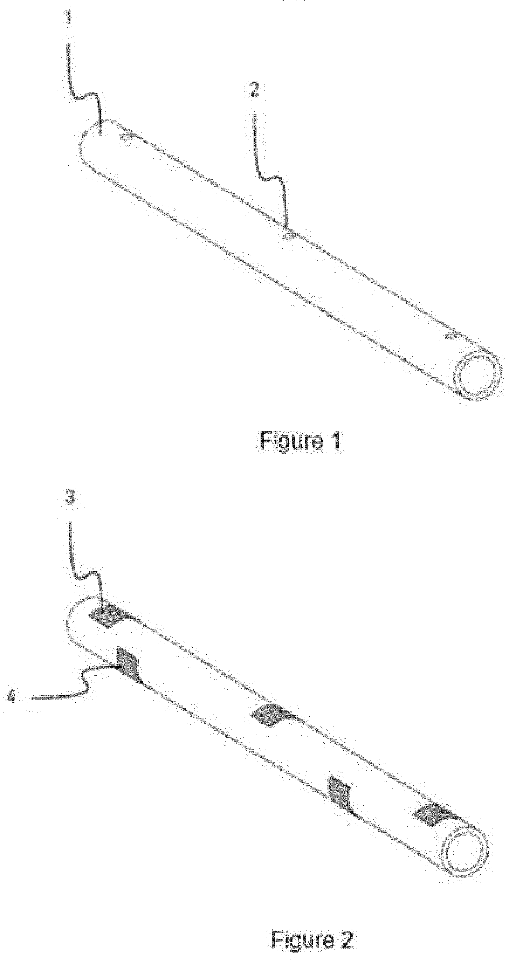

Figure 1 shows the general outlook of the rail (1) to be coated.

According to the drawing, the rail (1) has a cylindrical form for the flow of fluids through it. There are holes (2) on the rail (1). Fuel exits through these holes (2) as fluid. Therefore, it is not desired for the fluid to leak from the joints of these holes (2).

Figure 2 shows the general outlook of the rail (1) coated. According to the drawing, the areas surrounding the holes (2) are coated. In addition, the different joints (4) on the rail (1) are also coated.

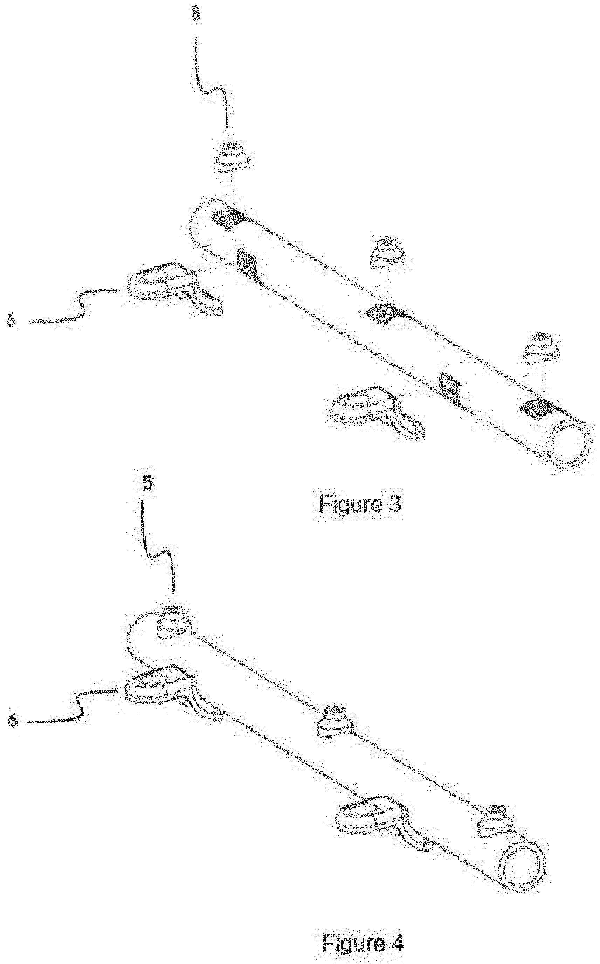

Figure 3 shows the installation-stage outlook of the rail (1) coated.

In the drawing, the injector cups (5) and the brackets (6) to be installed to the coated sections on the rail (1) are shown. The stainless steel pipe (1) shown in Figure 1, which constitutes the said GDI (Gasoline Direct Injection) fuel rail (1), has holes (2) on it, to which the injector cups will be joined. Apart from this, there are also fuel inlet joint (4) and installation brackets (6) on the part.

Figure 4 shows the installation outlook of the rail (1) coated. Since joining is achieved before this installation by means of brazing, the possible leaks after installation are prevented. As seen in figure 4, after different parts such as the injector cups (5) and the brackets (6) are bonded together by means of welding methods such as laser welding, spot welding or TIG, the copper brazing paste is applied to the joints by means of pneumatic or volumetric dispensing pumps. However, it is desired to apply the brazing paste only to the sections where the holes for the injector cups are located.

The method according to the present invention relates with applying the brazing paste discontinuously and only onto the desired sections on the surface of the fuel rail (1), for the installation of the external elements such as injector cups (5) and/or brackets (6) to the fuel rails (1).

According to the present invention, the fuel rail (1) moving on a conveyor band (7) reaches the surface point to be coated, the desired sections on the rail (1) are coated with the brazing paste as the roller (9) contacts the surface of the rail (1) with the downward movement of the moving roller (9) positioned above and/or with the upward movement of the conveyor band (7) carrying the fuel rail (1) beneath.

After this, the contact of the roller (9) with the surface of the rail (1) is interrupted with the upward movement of the roller (9) or the downward movement of the conveyor band (7), and the processes described above are repeated when the next fuel rail (1) reaches the surface point to be coated.

Figure 6 shows the outlook of the coating process according to the present invention. While the rail (1) moves on the conveyor band (7), the smearing of the brazing paste is interrupted when the contact with the fuel rail (1) is interrupted with the upward movement of the moving rollers (9). At the sections where smearing is required, the rollers (9) are lowered again (figure 6).

As seen in figure 6, there are desired number of moving rollers (9) positioned above. In this process, the brazing paste is smeared on the upper part of the roller (9), and it is applied on the fuel rail (1) that moves by means of the conveyor bad (7) beneath. In this application process, the said roller (9) moves on the vertical axis in upward-downward direction. When the fuel rail (1) moving with the conveyor band (7) reaches the surface point to be coated, the roller (9) contacts the surface of the rail (1) with its downward movement and applies the brazing paste, so the coating (10) is formed at the desired point.

After the brazing paste coating (10) is formed at the desired point, the roller (9) moves upward, and in the meantime, the fuel rail (1) continues its movement with the conveyor band (7). When the next fuel rail (1) reaches the surface point to be coated, the roller (9) moves downward in the same way and contacts the fuel rail (1) and applies the brazing paste, so the coating (10) is formed on the rail (1).

In an alternative method shown in figure 6, while the roller (9) has only rotating movement, the conveyor band (7) moves in upward-downward direction. In this method, when the fuel rail (1) reaches the surface point to be coated, the conveyor band (7) moves in upward direction, the pipe rail (1) contacts the roller (9) for coating with brazing paste and the coating (10) is formed. After the coating process, the conveyor band (7) moves in downward direction, interrupting the contact of the roller (9) with the pipe rail (1). When the next rail (1) reaches the point to be coated, the conveyor band (7) again moves upward and the fuel rail (1) on it contacts the moving roller (9), so the coating (10) is formed.

With the invented process, required amount of coating (10) with brazing paste is formed on the joints of the GDI (Gasoline Direct Injection) fuel rail (1) by means of roller coating, for example onto injector cup joint (3) or onto bracket joint (4). Later, the parts (5, 6) - to be installed on the sections where brazing paste is applied - are bonded as shown in figure 3, and they are brazed in the furnace.

## Claims

1. A method of joining external elements such as injector cups and/or inlet fitting and/or sensor port (5) and/or brackets (6) to a Gasoline Direct Injection (GDI) fuel rail (1) by means of brazing, and
discontinuously coating only the desired sections on the rail (1) with brazing paste with a view to provide the leak-proof assembly of injector cups, inlet fittings, sensor ports (5) and brackets (6),
being **characterised in that**:
the fuel rail (1) moving on a conveyor band (7) reaches the surface point to be coated with brazing paste;
the roller (9) positioned above moves downward and/or
the conveyor band (7) below carrying the fuel rail (1) moves upward, so the roller (9) contacts the surface of the rail (1) for an instant and the desired sections on the surface of the rail (1) are coated with the brazing paste, after which the contact of the roller (9) with the surface of the rail (1) is interrupted with the upward movement of the roller (9) or the downward movement of the conveyor band (7),
and the processes described above are repeated when the next fuel rail (1) reaches the surface point to be coated with brazing paste.

2. The method according to Claim 1, in which the fuel rail (1) moving on a conveyor band (7) reaches the surface point to be coated with brazing paste; the desired sections on the rail (1) are coated with the brazing paste as the roller (9) contacts the surface of the rail (1) with the downward movement of the moving roller (9), after which the contact of the roller (9) with the surface of the rail (1) is interrupted with the upward movement of the roller (9), and the processes described above are repeated when the next fuel rail (1) reaches the surface point to be coated with brazing paste.

3. The method according to Claim 1, in which the fuel rail (1) moving on a conveyor band (7) reaches the surface point to be coated with brazing paste; the conveyor band (7) below carrying the fuel rail (1) moves upward, so the roller (9) contacts the surface of the rail (1) and the desired sections on the surface of the rail (1) are coated with the brazing paste, after which the contact of the roller (9) with the surface of the rail (1) is interrupted with the downward movement of the conveyor band (7),
and the processes described above are repeated when the next fuel rail (1) reaches the surface point to be coated with brazing paste.

## Patentansprüche

1. Verfahren für die Verbindung der externen Elemente wie eine Einspritzventil-Kappe und/oder eine Einlaufgarnitur und/oder Sensoranschlüsse (5) und/oder Klammern (6) mit einer Benzin-Direkteinspritzung (GDI)
Kraftstoffleitung (1) anhand des Hartlötens und
die diskontinuierliche Beschichtung der nur gewünschten Ausschnitte auf der Kraftstoffleitung (1) mit der Lotpaste, um der auslaufsichere Aufbau der Einspritzventil-Kappte, Einlaufgarnitur, Sensoranchlüsse (5) und Klammern (6) zu gewährleisten,
**dadurch gekennzeichnet** sich, dass
die sich auf einem Förderband (7) bewegende Kraftstoffleitung den mit der Lotpaste zu beschichtenden Oberflächenpunkt erreicht;
die darauf angeordnete Walze (9) sich abwärts bewegt und/oder
das die Kraftstoffleitung (1) unten tragende Förderband (7) sich aufwärts bewegt, sodass die Walze (9) für eine Instanz mit der Oberfläche des Kraftstoffleitung (1) in Verbindung tritt und die gewünschte Ausschnitte auf der Oberfläche der Kraftstoffleitung mit der Lotpaste beschichtet wird,
wonach der Kontakt der Walze (9) mit der Oberfläche der Kraftstoffleitung (1) mit der Aufwärtsbewegung der Walze (9) oder der Abwärtsbewegung des Förderbandes (7) unterbrochen wird,
und das oben-genannte Verfahren wiederholt wird, wenn die nächste Kraftstoffleitung (1) den mit der Lotpaste zu beschichtenden Oberflächenpunkt erreicht.

2. Verfahren gemäß Anspruch 1, wobei die sich auf einem Förderband (7) bewegende Kraftstoffleitung (1) den mit der Lotpaste zu beschichtenden Oberflächenpunkt erreicht; die gewünschte Ausschnitte auf der Kraftstoffleitung (1) mit der Lotpaste beschichtet wird, als die Walze (9) die Oberfläche der Kraftstoffleitung (1) mit dem Abwärtsbewegung der sich bewegende Walze (9) in Verbindung treten, wonach der Kontakt der Walze (9) mit der Oberfläche der Kraftstoffleitung (1) mit der Aufwärtsbewegung der Walze (9), und das oben-genannte Verfahren wiederholt wird, wenn die nächste Kraftstoffleitung (1) den mit der Lotpaste zu beschichtenden Oberflächenpunkt erreicht.

3. Verfahren gemäß Anspruch 1, wobei die sich auf einem Förderband (7) bewegende Kraftstoffleitung (1) den mit der Lotpaste zu beschichtenden Oberflächenpunkt erreicht; das die Kraftstoffleitung (1) unten tragende Förderband (7) sich aufwärts bewegt, sodass die Walze (9) mit der Oberfläche des Kraftstoffleitung (1) in Verbindung tritt und die gewünschte Ausschnitte auf der Oberfläche der Kraftstoffleitung (1) mit der Lotpaste beschichtet wird, wonach der Kontakt der Walze (9) mit der Oberfläche der Kraftstoffleitung (1) mit der Abwärtsbewegung des Förderband (7) unterbrochen wird, und das oben-genannte Verfahren wiederholt wird, wenn die nächste Kraftstoffleitung (1) den mit der Lotpaste zu beschichtenden Oberflächenpunkt erreicht.

## Revendications

1. Un procédé pour relier des éléments externes tels que des coupelles d'injecteur et/ou un embout d'arrivée et/ou un port de capteur (5) et/ou des supports (6) à une rampe de distribution de carburant (1) à Injection Directe d'Essence (GDI) au moyen d'un brasage, et de manière discontinue enduire uniquement les sections souhaitées de la rampe (1) avec de la pâte de brasage en vue de réaliser l'assemblage étanche des coupelles d'injecteur, des embouts d'arrivée, des ports de capteur (5) et des supports (6),
**caractérisé en ce que**:
la rampe de distribution de carburant (1) qui se déplace sur une bande transporteuse (7) atteint le point de surface à revêtir avec de la pâte de brasage;
le rouleau (9) qui est positionné au-dessus se déplace vers le bas et/ou la bande transporteuse (7) en dessous qui porte la rampe de distribution de carburant (1) se déplace vers le haut de manière à ce que le rouleau (9) entre en contact avec la surface du rail (1) pendant un instant et les sections souhaitées sur la surface de la rampe (1) sont revêtues avec la pâte de brasage,
après quoi le contact du rouleau (9) avec la surface de la rampe (1) est interrompu par le mouvement ascendant du rouleau (9) ou le mouvement descendant de la bande transporteuse (7),
et les processus qui sont décrits ci-dessus sont répétés lorsque la rampe de distribution de carburant suivante (1) atteint le point de surface à revêtir avec de la pâte de brasage.

2. Procédé selon la revendication 1, dans lequel la rampe de distribution de carburant (1) qui se déplace sur une bande transporteuse (7) atteint le point de surface à revêtir avec de la pâte de brasage; les sections souhaitées sur la rampe (1) sont revêtues avec de la pâte de brasage lorsque le rouleau (9) entre en contact avec la surface de la rampe (1) avec le mouvement vers le bas du rouleau mobile (9), après quoi le contact du rouleau (9) avec la surface de la rampe (1) est interrompu avec le mouvement ascendant du rouleau (9), et les processus qui sont décrits ci-dessus sont répétés lorsque la rampe de distribution de carburant suivante (1) atteint le point de surface à revêtir avec de la pâte de brasage.

3. Procédé selon la revendication 1, dans lequel la rampe de distribution de carburant (1) qui se déplace sur une bande transporteuse (7) atteint le point de surface à revêtir avec de la pâte de brasage;
la bande transporteuse (7) en dessous portant la rampe de distribution de carburant (1) se déplace vers le haut, de manière à ce que le rouleau (9) entre en contact avec la surface de la rampe (1) et les sections souhaitées sur la surface de la rampe (1) sont revêtues avec de la pâte de brasage, après quoi le contact de la bande transporteuse (7) en dessous portant la rampe de distribution de carburant (1) se déplace vers le haut, de manière à ce que le rouleau (9) entre en contact avec la surface de la rampe (1) et les sections souhaitées sur la surface de la rampe (1) sont revêtues avec de la pâte de brasage, après quoi le contact du rouleau (9) avec la surface de la rampe (1) est interrompu par le mouvement descendant de la bande transporteuse (7),
et les processus décrits ci-dessus sont répétés lorsque la rampe de distribution de carburant suivante (1) atteint le point de surface à revêtir avec de la pâte de brasage.
